# EUROPEAN PATENT SPECIFICATION

(11) **EP 0 683 499 B1**
(45) Date of publication and mention of the grant of the patent: **13.01.1999**
(21) Application number: 94303563.4
(22) Date of filing: 18.05.1994
(51) Int. Cl.: H01H 25/04, H01H 3/62

(54) **Control key device**
Steuerungstasten-Vorrichtung
Dispositif à touche de commande

(43) Date of publication of application: 22.11.1995
(60) Divisional application: 97111237.0
(73) Proprietor: SEGA ENTERPRISES, LTD., Tokyo 144 (JP)
(72) Inventor: Date, Toshinori, Ohta-ku, Tokyo (JP)
(74) Representative: Luckhurst, Anthony Henry William

(56) References cited:
- EP-A- 0 088 365
- EP-A- 0 477 098
- WO-A-90/15427
- DE-A- 3 843 650
- FR-A- 2 531 215

## Description

### BACKGROUND OF THE INVENTION

The present invention generally relates to control key devices, and more particularly to a control key device which may be used as an input device for specifying a moving direction of a displayed character or the like on a video game apparatus or a portable electronic game apparatus.

A control key device having an improved response characteristic was previously proposed in a Japanese Laid-Open Patent Application No. 6-052757. This previously proposed control key device as defined in the preamble of claim 1 includes a resilient member which has four bulges with electrically conductive portions, a contact pressing member having a spherical surface and four legs resting on the four bulges of the resilient member, a dome-shaped portion of a casing having a bottom surface making contact with the spherical surface of the contact pressing member, and a key fixed to the contact pressing member via an opening in the curved portion. A bottom surface of this key makes contact with a top surface of the dome-shaped portion.

When the key is tilted in one direction from a home position, the bottom surface of the key slides on the top surface of the dome-shaped portion, and the spherical surface of the contact pressing member slides with respect to the bottom surface of the curved portion. As a result, one of the legs pushes a corresponding bulge of the resilient member, and the electrically conductive portion of this bulge makes electrical contact with electrodes on the circuit board.

Because the movement of the key is guided by both the curved upper and inner surfaces of the dome-shaped portion while the bottom surface of the key contacts the upper surface of the dome-shaped portion and the top surface of the contact pressing member contacts the inner surface of the dome-shaped portion, the vertical movement of the key is restricted, and, accordingly, a large tilting movement and a relatively strong stroke are required to tilt the key so as to make the electrically conductive portion contact the electrodes on the circuit board. Furthermore, because the spherical surface of the contact pressing member slides against the bottom surface of the curved portion of the casing, the spherical surface of the contact pressing member may stick to the bottom surface of the curved portion depending on the friction between the two surfaces. This sticking phenomenon may occur particularly when the spherical surface of the contact pressing member hits against an edge of the bottom surface of the curved portion and gets caught by the edge. When such a sticking occurs, the key will be locked to the tilted position, and the operator would have to forcibly return the key to the home position because the key will not return to the home position by itself.

WO-A-90/15427 discloses a multi-directional switch according to the preamble of claims 1 and 14.

A keyboard key acting on a raised movable contact beneath such that depression of the key moves the contact to bridge two fixed contacts is known from EP0088365.

A sliding switch assembly comprising a pair of spring contacts designed to connect to a pair of conductors on a substrate in which sliding movement of the switch causes an action against the spring action of the contacts to connect it to the corresponding conductor is disclosed by DE-A1-3843650.

### SUMMARY OF THE INVENTION

Accordingly, it is a general object of the present invention to provide a novel and useful control key device in which the problems described above are eliminated.

Another object of the present invention is to provide a control key device having an improved response characteristic with a light and smooth touch key operation as well as a quick operation of the key.

Still another object of the present invention is to provide a control key device in which the key can be tilted with relatively small force and stroke.

Still another object of the present invention is to provide a control key device which can positively prevent sticking of a key at a tilted position so that the tilted key will always return to a home position by itself.

A further object of the present invention is to provide a control key device in which the gap or space between the key top and the wall of the casing surrounding the key is minimised to reduce the space required to provide the key.

Other objects and further features of the present invention will be apparent from the following detailed description when read in conjunction with the accompanying drawings.

Aspects of the invention are set forth in the accompanying independent claims, and preferred features are set forth in the dependent claims.

### BRIEF DESCRIPTION OF THE DRAWINGS

Fig. 1 is a perspective view showing an embodiment of the external appearance of a control key device according to the present invention;
Fig. 2 is a cross sectional view showing a first embodiment of the control key device according to the present invention;
Fig. 3 is a cross sectional view showing the first embodiment in a disassembled state;
Fig. 4 is a cross sectional view showing the first embodiment in a state where a key is tilted from a home position;
Fig. 5 is a cross sectional view for explaining sticking of the key at the tilted position;
Fig. 6 is a cross sectional view showing an important part of a second embodiment of the control key device according to the present invention;
Fig. 7 is a cross sectional view showing an important part of a third embodiment of the control key device according to the present invention;
Fig. 8 is a cross sectional view showing a fourth embodiment of the control key device according to the present invention;
Fig. 9 is a cross sectional view showing a fifth embodiment of the control key device according to the present invention;
Fig. 10 is a perspective view showing the fifth embodiment in a disassembled state;
Fig. 11 is a plan view showing the fifth embodiment;
Fig. 12 is a cross-sectional view showing a sixth embodiment of the control key device according to the present invention;
Fig. 13 is a perspective view showing the sixth embodiment in a disassembled state; and
Figs. 14A and 14B respectively are cross-sectional views for explaining the switch action of the control key device.

### DESCRIPTION OF THE PREFERRED EMBODIMENTS

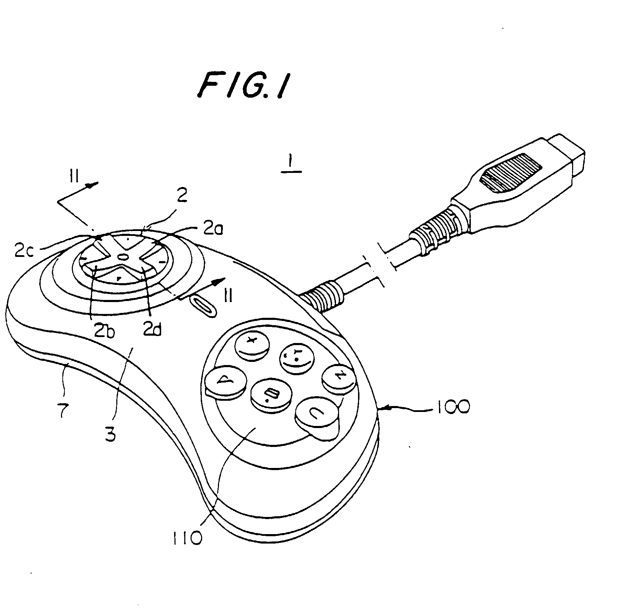

Fig. 1 is a perspective view showing an embodiment of the external appearance of a control key device according to the present invention. As shown in Fig. 1, a control key device 1 generally includes a key 2, a casing 100 and a plurality of buttons 110. The casing 100 is made up of upper and lower halves 3 and 7. The key 2 has projections 2a through 2d which an operator pushes with his finger to tilt the key 2. When one of the projections 2a through 2d is pushed, the key 2 is tilted to specify a moving direction of a displayed character or the like on a video game apparatus or a portable electronic game apparatus. The buttons 110 are manipulated to control various functions modes of the video or electronic game.

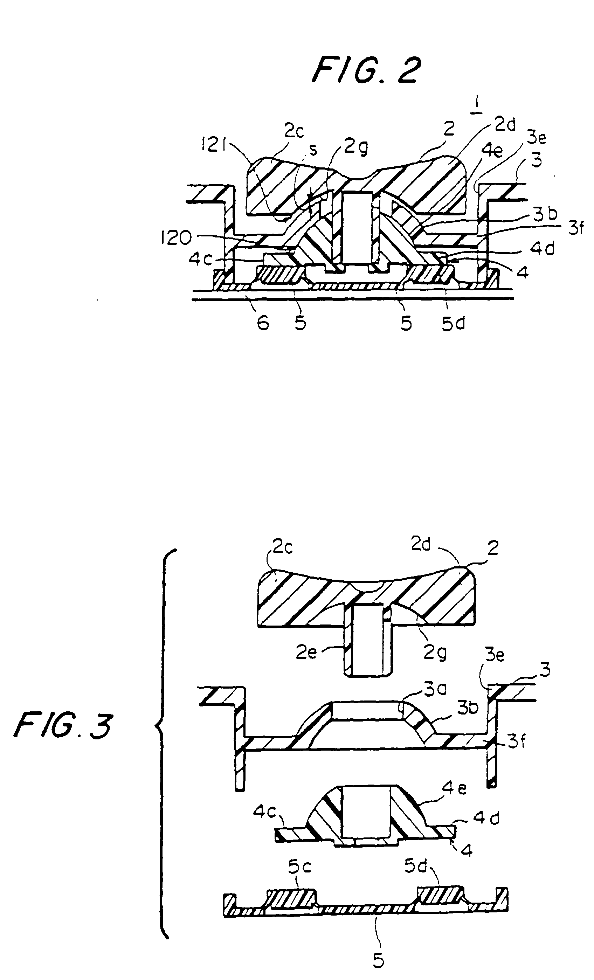

Fig. 2 is a cross sectional view showing a first embodiment of the control key device according to the present invention, and Fig. 3 is a cross sectional view showing the first embodiment in a disassembled state. The cross-section in Fig. 2 is a viewed at line II-II in Fig. 1.

As shown in Figs. 2 and 3, the key portion of the control key device 1 generally includes the key 2, a dome-shaped portion 3b of the upper half 3, a contact pressing member 4, and a resilient member 5, and a wiring board (or substrate) 6. A stem portion 2e of the key 2 is secured on the contact pressing member 4 via a hole 3a in the dome-shaped portion 3b of the upper half 3.

The upper half 3 has a cavity 3e and the dome-shaped portion is supported by a flat bottom portion 3f which extends from the side wall in the cavity 3e of the upper half 3. The flat bottom portion 3f suspends the dome-shaped portion spaced from the substrate 6 and so an extra force applied to the top of the key 2 by an operator is prevented from reaching the substrate 6. In a home position of the key 2 shown in Fig. 2, a bottom surface 2g of the key 2 makes contact with a top surface of the dome-shaped portion 3b. In addition, a bottom surface of the dome-shaped portion 3b makes contact with a spherical surface portion 4e of the contact pressing member 4.

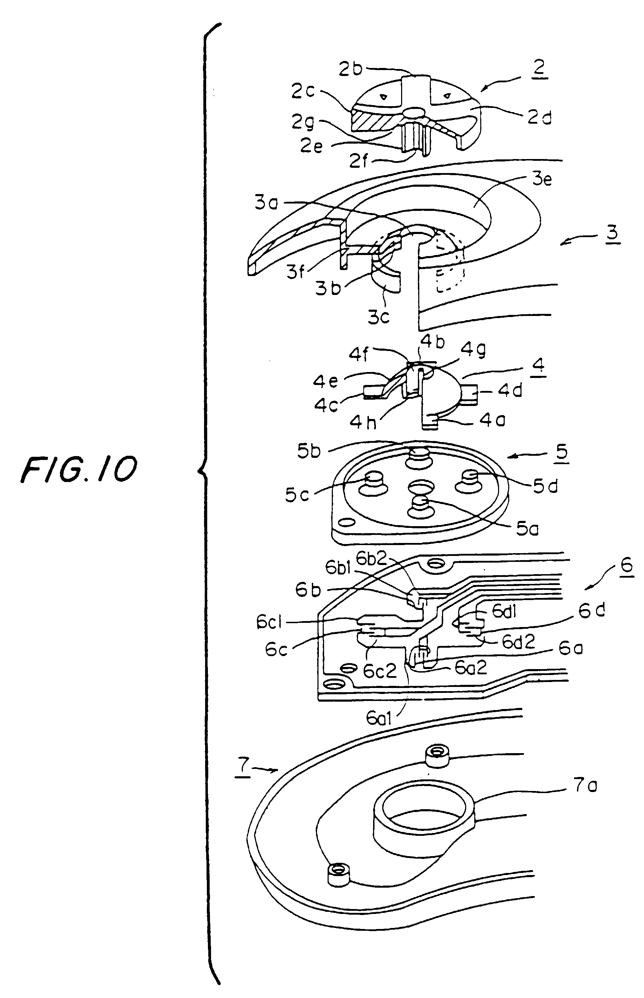

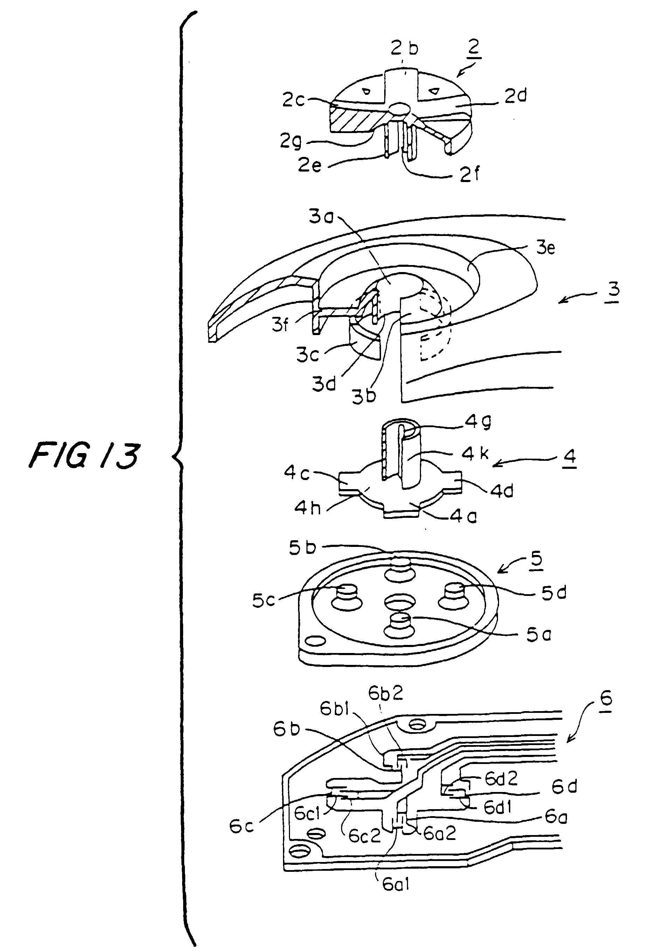

Furthermore, in the home position of the key 2, legs 4a through 4d (only 4c and 4d are shown in Figs. 2 and 3) of the contact pressing member 4 rests on corresponding bulges 5a through 5d (only 5c and 5d are shown in Figs. 2 and 3) of the resilient member 5 so that there exists a gap s between the spherical bottom surface 2g and the top surface of the dome-shaped portion 3b. An electrically conductive portion is provided at least on a bottom of each of the bulge 5a through 5d. For example, as shown in Fig. 14A, the bulge 5c consists of a top portion 5c1 of a disk shape, a conductive portion 5c3 provided on the bottom of the top portion 5c1 and a skirt portion 5c2 of a trapezoidal cylinder shape which movably supports the top portion 5c1. On the substrate 6 there are provided a pair of contacts or electrodes 6c1 and 6c2. The conductive portion 5c3 constitutes a movable switch with the electrodes 6c1 and 6c2. Each of the bulges 5a through 5d has the same or similar structure and constitutes a switch with the electrode under the conductive portion. The arrangement of the electrodes 6a1, 6a2 through 6d1, 6d2 is depicted in Figs. 10 and 13. The electrically conductive portion does not make electrical contact with a corresponding electrical contact of the wiring board 6 in the home position of the key 2 shown in Fig. 2.

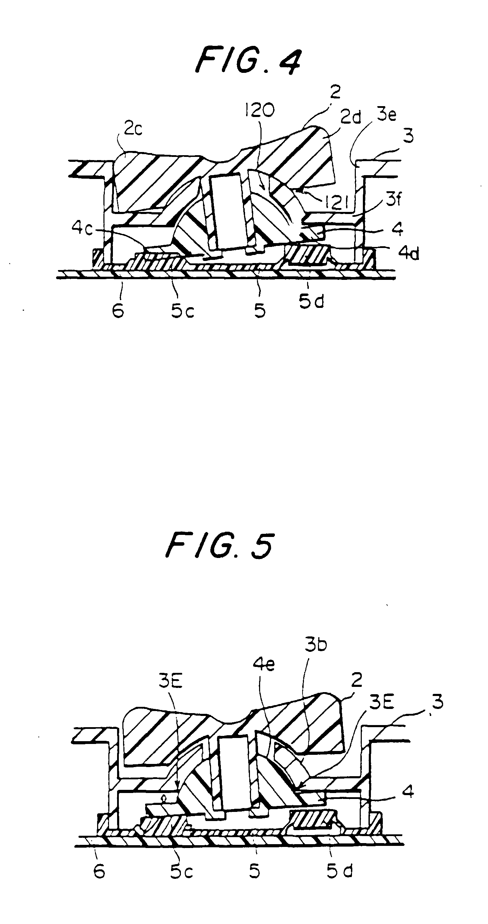

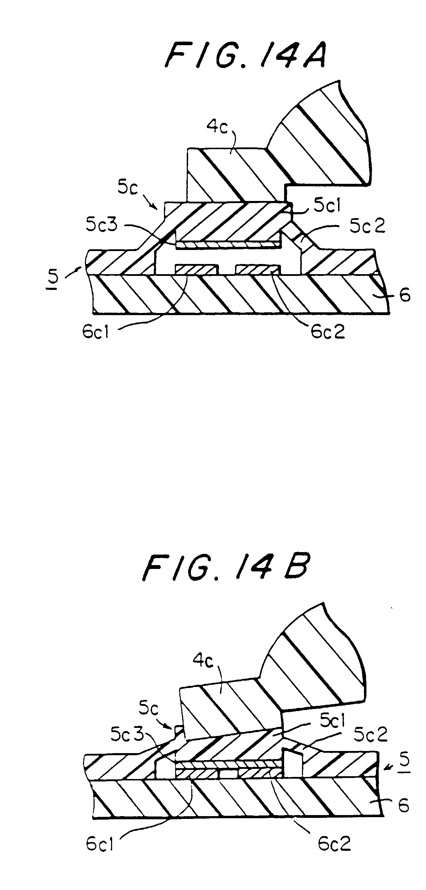

When the operator pushes down, for example, the key 2 at the projection 2c the key 2 tilts from the home position and the leg 4c of the contact pressing member 4 presses the corresponding bulge 5c in Fig. 4 For example, as shown in Fig. 14B the electrically conductive portion 5c3 makes electrical contact with the corresponding electrodes 6c1 and 6c2 of the wiring board 6. As a result, an electrical circuit 6c shown in Fig. 10 or 13 detects the titled direction of the key 2 based on the contact at the electrodes 6c1 and 6c2.

When the operator lets go of the tilted key 2 in Fig. 4, the key 2 returns to the home position shown in Fig. 2 by itself due to the resilient force of the resilient member 5, particularly of the skirt portion 5c2 at the bulge 5c.

When the key 2 is pushed at its top surface, the key 2 moves down to decrease the gap s so that the bottom surface 2g of the key 2 contacts the top surface of the dome-shaped portion 3b, and the key 2 tilts from the home position shown in Fig. 2 to the tilted position shown in Fig. 4, while the bottom surface 2g of the key 2 slides on the top surface of the dome-shaped portion 3b, and the spherical surface portion 4e of the contact pressing member 4 comes off the bottom surface of the dome-shaped portion 3b. The bottom surface 2g and the top surface of the dome-shaped portion 3b each have mutually mating spherical surfaces, and accordingly, the key 2 moves smoothly on the dome-shaped portion 3b when the key 2 receives a pressing force at the top surface. On the other hand, the contact pressing member tilts while its top surface is spaced apart from the bottom surface of the dome-shaped portion 3b, which reduces the friction between the contact pressing member 4 and the dome-shaped portion 3b.

The movement of the key 2 of going down by the force applied at the top surface of the key 2 leads the bulges 5a through 5d to move down closer to the electrodes on the circuit board 6 by the gap s between the key 2 and the dome-shaped portion 3b and the key 2 tilts along the top surface of the dome-shaped portion 3b. These movements require less tilting movement to make the conductive portion 5c3 in contact with the electrode than in the configuration as proposed in the Japanese Laid-Open Patent Application No. 6-052757 in which there is not provided a gap between the bottom surface of the key and the top surface of the dome-shaped portion.

Then, when the operator releases the pushing force, the bottom surface 2g of the key 2 comes off the top surface of the dome-shaped portion 3b and the spherical surface portion 4e of the contact pressing member 4 contacts and slides against the inner spherical surface of the dome-shaped portion 3b when the key 2 returns from the tilted position to the home position. Thus the light and smooth touch in the manipulation of the key is obtained.

However, because of the friction between the spherical surface portion 4e and the bottom surface of the dome-shaped portion 3b, there is a possibility of the key 2 sticking at the tilted position or an intermediate position between the tilted position and the home position.

For this reason, it is conceivable to increase the resilient force exerted by the resilient member 5. However, this would require more force to tilt the key 2 from the home position to the tilted position, and the light and smooth touch (so-called feather touch) key operation is hindered to make and a quick operation of the key 2 becomes difficult.

On the other hand, in order to increase the resilient force of the resilient member 5, it is conceivable to increase the gap between the electrically conductive portions of the bulges 5a through 5d and the wiring board 6 in the home position of the key 2. But in this latter case, it would require the key 2 to be tilted with a larger stroke in order to achieve the electrical contact between the electrically conductive portion and the corresponding electrodes of the wiring board 6. As a result, the light and smooth touch key operation is hindered and it becomes impossible to make a quick key operation. Furthermore, the need to tilt the key 2 with the large stroke would require more space to provide the key 2 on the control key device 1.

In addition, the above described sticking of the key 2 may occur particularly when the spherical surface portion 4e of the contact pressing member 4 pushes against an edge 3E at the bottom part of the dome-shaped portion 3b as shown in FIG.5. In order to guarantee the restoration of the pressed bulges 5a through 5d, it is in general necessary to provide a gap of approximately 1 mm between the electrically conductive portion of the bulge and the wiring board 6 in the home position of the key 2. For this reason, there is a limit to reducing the pushing force of the spherical surface portion 4e acting on the edge 3E. In other words, the restoration of the bulges 5a through 5d and thus the automatic return of the tilted key 2 to the home position may not be guaranteed if the resilient force exerted by the resilient member 5 is too weak, but if the resilient force exerted by the resilient member 5 is too strong, the possibility of the spherical surface portion 4e becoming caught by the edge 3E increases.

In first embodiment of the control key device of the present invention, a lubricant film 120 is provided at least between the spherical surface portion 4e and the bottom surface of the dome-shaped portion 3b. For example, a grease or the like may be used as the lubricant. In addition, it is also possible to provide a lubricant film 121 between the bottom surface 2g of the key 2 and the top surface of the dome-shaped portion 3b. The lubricant films 120 and 121 may be coated on either of the two surfaces which relatively slide with respect to one another, for example.

According to the first embodiment with the lubricant, it is possible to prevent sticking of the key 2 at the tilted position or the intermediate position between the tilted position and the home position. In addition, it is possible to maintain the light and smooth touch key operation and to make the quick operation of the key 2.

As a modification of the first embodiment with the lubricant, it is possible to use a material which has a lubricative surface for the key 2, the dome-shaped portion 3b, and the spherical portion 4e. According to this modification, it becomes unnecessary to provide the lubricant film.

The characteristic of the lubricant may deteriorate with time, and it may be difficult to maintain a uniform lubricant film without maintenance of the control key device. Hence, a description will now be given of embodiments of the control key device according to the present invention which can eliminate such possible problems of the first embodiment.

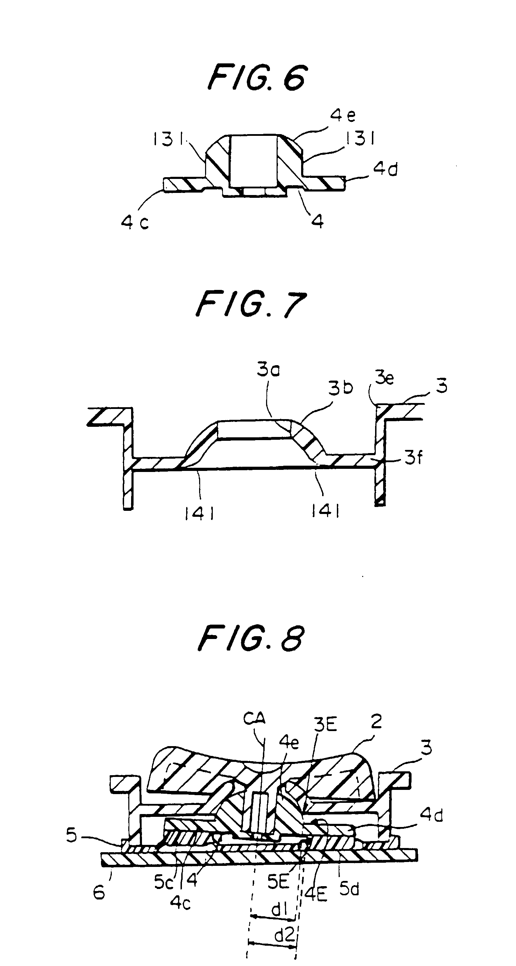

FIG.6 is a cross sectional view showing an important part of a second embodiment of the control key device according to the present invention. More particularly, FIG.6 shows the contact pressing member 4.

In this second embodiment, a cutout portion 131 is provided at the lower part of the spherical surface portion 4e corresponding to the position of the edge 3E of the dome-shaped portion 3b shown in FIG.5.

According to this second embodiment, the edge of the dome-shaped portion 3b is prevented from catching the spherical surface portion 4e of the contact pressing member 4 because of the provision of the cutout portion 131. As a result, it is always possible to prevent sticking of the key 2 at the tilted position or the intermediate position between the tilted position and the home position. In addition, the light and smooth touch key operation can be maintained, and it is possible to make the quick operation of the key 2.

FIG.7 is a cross sectional view showing an important part of a third embodiment of the control key device according to the present invention. More particularly, FIG.7 shows the dome-shaped portion 3b of the upper half 3.

In this third embodiment, a rounded portion 141 is provided at a position corresponding to the edge 3E shown in FIG.5. A radius of curvature of this rounded portion 141 is greater than that of the remaining bottom surface part of the dome-shaped portion 3b connecting to the rounded portion 141. As a result, it is always possible to prevent sticking of the key 2 at the tilted position or the intermediate position between the tilted position and the home position. In addition, the light and smooth touch key operation can be maintained, and it is possible to make the quick operation of the key 2.

Fig. 8 is a cross sectional view showing a fourth embodiment of the control key device according to the present invention. In Fig. 8, those parts which are the same as those corresponding parts in Figs. 1 through 5 are designated by the same reference numerals, and a description thereof will be omitted. Fig. 8 shows the fourth embodiment in the tilted position of the key 2.

In this fourth embodiment, a maximum horizontal distance d1 between a center axis CA of the key 2 and the bottom line of the spherical surface portion 4e at which the spherical surface portion 4e meets the legs 4a through 4d is set smaller than a horizontal distance d2 between the center axis CA and an inner edge of each of the top portions 5al through 5d1 of the bulges. The distance d1 is essentially the horizontal distance between the center axis CA and the edge 3E shown in Fig. 5. As a result, the resilient force exerted by the bulge 5d acts at a position further away from the edge 3E relative to the center axis CA when compared to the case shown in Fig. 5, and it is possible to more smoothly return the key 2 to the home position due to the leverage function.

However, as described above, the distance between the electrically conductive portion of the bulge and the corresponding electrical contact of the wiring board in the normal state where the key is at the home position must be set to a predetermined value in order to avoid erroneous contact and to guarantee the return of the bulge to the normal state after being pushed by the leg of the contact pressing member. For this reason, it is necessary to tilt the key a predetermined amount in order to achieve the electrical contact between the electrically conductive portion of the bulge and the electrical contact. As a result, there is a limit to reducing the stroke distance of the key, and depending on this stroke distance, it may take time to realise the electrical contact described above and the response characteristic of the control key device may become poor.

On the other hand, to enable a large stroke of the key when tilting the key, it becomes necessary to provide large spaces between the wall of the hole 3a and the stem portion 2e as shown in Figs. 2 and 3 and between the key top and the surrounding wall of the casing 3 surrounding the key top. As a result, size of the control key device becomes large. In addition, the provision of the large spaces around the key top may easily allow dust particles or the like to enter within the control key device, and the operator's finger tip may be pinched in the large space between the key top and the surrounding wall.

Next, a description will be given of embodiments of the control key device according to the present invention which can realize quick electrical contact and realize a satisfactory response characteristic.

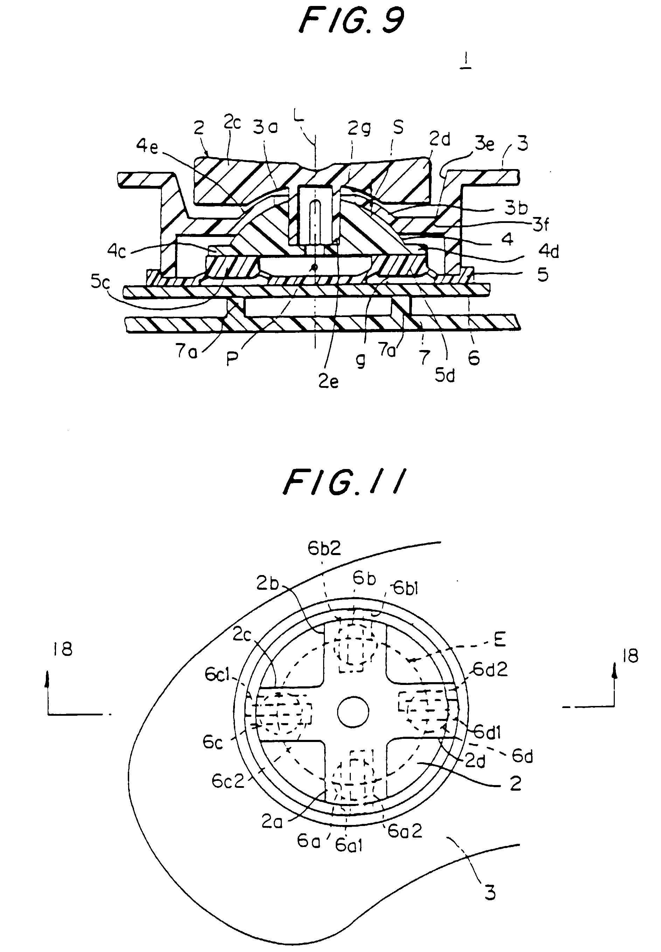

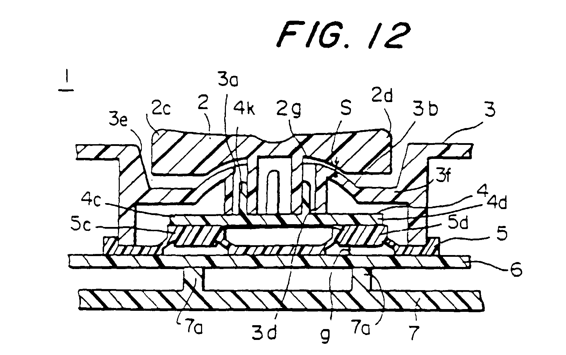

Fig. 9 is a cross sectional view at line IX-IX in Fig. 11 showing a fifth embodiment of the control key device according to the present invention, and Fig. 10 shows a perspective view of the fifth embodiment in a disassembled state. In addition, Fig. 11 is a plan view showing the fifth embodiment. In Figs. 9 through 11, those parts which are the same as those corresponding parts in Figs. 1 through 5 are designated by the same reference numerals.

The control key device 1 shown in Figs. 9 through 11 generally includes the key 2, the upper half 3 of the casing 100, a contact pressing member 4, the resilient member 5, the wiring board 6, and the lower half 7 of the casing 100. For example, the key 2 may be made of a nylon resin, the upper and lower halves 3 and 7 may be made of an ABS resin, and the contact pressing member 4 may be made of a polyacetal resin.

As shown in Figs. 10 and 11, a pair of electrical contacts 6a and 6b and a pair of electrical contacts 6c and 6d are symmetrically arranged on a circumference E of the wiring board 6. Each of the electrical contacts has a pair of electrodes (6a1 and 6a2, 6b1 and 6b2, 6c1 and 6c2, and 6d1 and 6d2 respectively) and constitutes an electrical switch with the corresponding movable conductive layer (5a3, 5b3, 5c3, 5d3, respectively) as shown in Figs. 14A and 14B. In addition, as shown in Fig. 9, the upper half 3 and the lower half 7 are connected by screws (not shown), for example, and the key portion is generally held within the casing 100. A ring-shaped wall 7a is provided on the lower half 7 at a position corresponding to the electrical contacts 6a through 6d of the wiring board 6 as shown in Fig. 10. Hence, the ring-shaped wall 7a supports the wiring board 6 immediately below the electrical contacts 6a through 6d in the assembled state of the control key device 1.

Extra forces applied by an operator during playing games are conducted to the substrate 6 through the control key 2, contact pressing member 4 and the depressed resilient bulges and cause the substrate 6 to bend or vibrate to cause misopertion of the switching action. Such misoperation is prevented by the supporting ring 7a.

The bulges 5a through 5d of the resilient member 5 are arranged at positions above the corresponding electrical contacts 6a through 6d on the wiring board 6. An electrically conductive portion is provided at least on a bottom of each of the bulges 5a through 5d. Hence, when the key 2 is tilted from the home position and the bulge 5c is pressed from the top and resiliently deformed, for example, the electrically conductive portion of this bulge 5a makes electrical contact with the corresponding electrical contact 6c on the wiring board 6. Hence, an electric circuit (not shown) detects the tilted direction of the key 2 based on the contact at the electrical contact. As shown in FIG.9, a gap g exists between the electrical contacts 6a through 6d and the corresponding electrically conductive portions of the bulges 5a through 5d. For example, this gap g is set to 1 mm.

For example, the electrical circuit for detecting the tilted direction of the key 2 based on the electrical contact between the corresponding electrical contact and the electrically conductive portion of the bulge is described in a Japanese Laid-Open Utility Model Application No.4-42029.

The upper half 3 generally covers the surface of the wiring board 6. The upper half 3 has a cavity 3e with the dome-shaped portion 3b and the hole 3a in this dome-shaped portion 3b. This hole 3a is concentric to the circumference E described above, and shares a center line L shown in FIG.9. A center P of curvature of the top surface (outer surface) of the dome-shaped portion 3b is located approximately at the center of the vertical height position of the electrically conductive portions of the bulges 5a through 5d.

The key 2 has a generally mushroom shape, that is, an approximate T-shaped cross section. A disk portion of the key 2 is exposed at the cavity 3e of the upper half 3, and projections 2a through 2d forming a cross are provided on the top surface of the disk portion. In addition, a hollow cylindrical stem portion 2e extends downwards from the disk portion of the key 2. A cutout 2f which extends vertically is provided on the inner surface of the stem portion 2e. Furthermore, a sliding surface 2g is provided on the bottom of the disk portion of the key 2. This sliding surface 2g makes sliding contact with the top surface of the dome-shaped portion 3b when a pressing force is applied to the key 2 by an operator. The sliding surface 2g may be formed by a curved or spherical surface corresponding to the spherical top surface of the dome-shaped portion 3b or, by projections which form a cross in correspondence with the top surface of the dome-shaped portion 3b. In the latter case, the projections on the bottom of the disk portion of the key 2 are provided at positions corresponding to the projections 2a through 2d, for example.

The contact pressing member 4 includes the legs 4a through 4d having horizontal bottom surfaces which make contact with the corresponding bulges 5a through 5d of the resilient member 5, and the spherical surface portion 4e which makes contact with the bottom surface (inner surface) of the dome-shaped portion 3b. A circular hole 4f is formed in the contact pressing member 4 from the top central part of the spherical surface portion 4e towards the bottom surface of the contact pressing member 4. The stem portion 2e of the key 2 fits into this hole 4f. The hole 4f is provided with a projection 4g which fits into the cutout 2f when the stem portion 2e is fitted into the hole 4f. Hence it is possible to fix the rotational position and the vertical position of the key 2 relative to the contact pressing member 4.

The ring-shaped wall 3c extends downwardly from the outer periphery of the dome-shaped portion 3b, and this ring-shaped wall 3c has 4 cutouts corresponding to the positions of the legs 4a through 4d. Hence, in the assembled state of the control key device 1, tips of the legs 4a through 4d project via the corresponding cutouts in the ring-shaped wall 3c. The legs 4a through 4d of the contact pressing member 4 can push against the corresponding bulges 5a through 5d of the resilient member 5, so as to achieve electrical contact between the electrically conductive portions of the bulges 5a through 5d and the corresponding electrical contacts 6a through 6d on the wiring board 6.

The projections 2a through 2d which form a cross on the top of the key 2 are arranged to correspond to the electrical contacts 6a through 6d of the wiring board 6. The key 2 is connected to the contact pressing member 4 by inserting the stem portion 2e into the hole 4f of the contact pressing member 4 via the hole 3a in the dome-shaped portion 3b. In the connected state, the tip end of the stem portion 2e makes contact with a surface 4h at the bottom of the hole 4f, and the projection 4g fits into the cutout 2f. The diameter of the hole 3a is greater than the diameter of the stem portion 2e so that the key 2 is free to tilt in all directions.

In the home position of the key 2 shown in FIG.9, a gap s is formed between the bottom surface 2g of the key 2 and the top surface of the dome-shaped portion 3b. For example, this gap s is set in a range of 0.3 mm to 0.5 mm. In addition, the legs 4a through 4d of the contact pressing member 4 rest on the corresponding bulges 5a through 5d of the resilient member 5, and the spherical surface portion 4e of the contact pressing member 4 makes movable contact with the bottom surface of the dome-shaped portion 3b.

When the operator gently places his finger on the key 2, the legs 4a through 4d of the contact pressing member 4 are displaced downwards against the resilient force exerted by the resilient member 5. As a result, the bottom surface 2g of the key 2 movably contacts the top surface of the dome-shaped portion 3b. In this standby state of the key, the bottom surface 2g of the key 2 can slide relative to the top surface of the dome-shaped portion 3b. In addition, the legs 4a through 4d of the contact pressing member 4 uniformly press the bulges 5a through 5d of the resilient member 5, but the vertical displacement is such that the electrically conductive portions of the bulges 5a through 5d will not make electrical contact with the electrical contacts 6a through 6d of the wiring board 6.

The above described vertical displacement of the key 2 amounts to the distance corresponding to the gap s. Even if the electrically conductive portions of the bulges 5a through 5d are displaced downwards by the distance corresponding to the gap s, the electrically conductive portions will not make electrical contact with the electrical contacts 6a through 6d because the gap g is set greater than the gap s.

When the operator wishes to tilt the key 2 from the standby state so that the electrical contact is achieved between the electrically conductive portion of the bulge 5c and the electrical contact 6c, the operator pushes the projection 2c of the key 2 by his finger with a force of 70 g to 80g, for example. In response to this pushing force applied on the key 2, the bottom surface 2g of the key 2 slides on the top surface of the dome-shaped portion 3b and the contact pressing member 4 tilts. As a result, the leg 4c of the contact pressing member 4 presses against the bulge 5c of the resilient member 5.

The center P of curvature of the dome-shaped portion 3c is located at the center of the vertical height position of the electrically conductive portions. Accordingly, when a manipulating force is applied to the projection 2c, the top of the key 2 rotates with respect to a virtual rotation center which is the spherical center P, and the leg 4 presses the bulge 5c downwards approximately in the vertical direction. As a result, the bulge 5c is resiliently deformed and the electrically conductive portion thereof makes electrical contact with the corresponding electrical contact 6c.

In the standby state where the operator's finger is placed on the key 2, the key 2 is already displaced downwards by the distance corresponding to the gap s, and the bottom surface 2g of the key 2 is in contact with the top surface of the dome-shaped portion 3b. Hence, the distance between the electrically conductive portion of the bulge 5c and the electrical contact 6c is already reduced to g-s. Accordingly, when the projection 2c of the key 2 is pushed in this standby state, the bottom surface 2g of the key 2 slides on the top surface of the dome-shaped portion 3b, and the contact pressing member 4 is tilted by an amount such that the leg 4c is displaced downwards by the distance g-s. When the contact pressing member 4 tilts, the leg 4d is displaced upwards opposite to the movement of the leg 4c within the corresponding cutout in the ring-shaped wall 3c of the upper half 3.

Therefore, even if the gap g is set so as to guarantee the automatic return of the key 2 from the tilted position to the home position, the tilting of the key 2 can be achieved by a relatively small force and the required stroke is small because the key 2 is tilted from the standby state described above. As a result, it is possible to improve the response characteristic of the control key device 1. That is, the light and smooth touch (so-called feather touch) key operation becomes possible, and a quick operation of the key 2 becomes possible.

Furthermore, since the stroke required to tilt the key 2 from the standby state is small, it is possible to minimize the gap between the top of the key 2 and the side wall in the cavity 3e of the upper half 3 surrounding the key 2. This minimized gap reduces the space required to provide the key 2. In addition, it is possible to prevent dust particles or the like from easily entering within the control key device 1 via this minimized gap, and also prevent the operator's finger tip from being caught within the minimized gap.

On the other hand, when the operator releases the tilted key 2, the resilient restoration force of the bulge 5c of the resilient member 5 pushes the leg 4c of the contact pressing member 4 upwards. Hence, the contact pressing member 4 is displaced upwards until the spherical surface portion 4e makes contact with the bottom surface of the dome-shaped portion 3b. In addition, the bottom surface 2g of the key 2 separates from the top surface of the dome-shaped portion 3b, and the key 2 returns to the home position shown in FIG.9.

Next, a description will be given of a sixth embodiment of the control key device according to the present invention, by referring to FIGS.12 and 13. FIG.12 is a cross sectional view showing the sixth embodiment, and FIG.13 is a perspective view showing the sixth embodiment in a disassembled state. In FIGS.12 and 13, those parts which are the same as those corresponding parts in FIGS.9 through 11 are designated by the same reference numerals, and a description thereof will be omitted.

This sixth embodiment is basically the same as the fifth embodiment, except that the contact pressing member 4 of this sixth embodiment does not have the spherical surface portion 4e.

As shown in FIGS.12 and 13, the contact pressing member 4 includes a boss portion 4k which is provided with the projection 4g which extends in the vertical direction. The stem portion 2e of the key 2 is press-fit into the boss portion 4k in a state where the projection 4g fits into the cutout 2f. The outer diameter of the boss portion 4k is smaller than the inner diameter of a ring-shaped wall portion 3d of the upper half 3 so that the key 2 is free to tilt from the home position.

in the above described embodiments, the description is given for the case where a relatively large force is applied from the top surface of the key-top and the entire key-top is lowered and tilted. However, depending on the magnitude of the manipulating force, the leg 4c of the contact pressing member 4 may push down on the bulge 5c of the resilient member 5 to thereby close the switch of the bulge 5c before the bottom surface 2g of the key 2 makes contact with the top surface of the dome-shaped portion 3b. In this case, when the pushing force is applied on the key 2 on the side of the projection 2c in FIG.12, for example, the upward movement of the contact pressing member 4 is suppressed on the side opposite to the side which receives the pushing force by the lower end portion of the ring-shaped wall portion 3d. The lower end portion of the ring-shaped wall portion 3d thus acts as a fulcrum, and the contact pressing member 4 moves down on the side of the leg 4c to push down on the bulge 5c. By such an operation, the key operation of the control key device 1 becomes lighter and smoother.

When the projections 2c and 2d of the key 2 are pushed at the same time from the respective directions, the key 2 moves down in a horizontal state. However, the bottom surface 2g of the key 2 makes contact with the top surface of the dome-shaped portion 3b which functions as a stopper, and the key 2 is stopped from further downward movement. As a result, it is possible to prevent an erroneous operation in which both the switches of the bulges 5c and 5d are closed simultaneously.

When the operator releases the key 2 from the tilted position, the legs 4a through 4d of the contact pressing member 4 is returned to the level state due to the action of the resilient restoration force exerted by the resilient member 5. When the contact pressing member 4 returns to the level state, this contact pressing member 4 is maintained at the central position within the cavity of the casing 100 by the action of the cutouts in the ring-shaped wall 3c corresponding to the legs 4a through 4d, and the top surface of the contact pressing member 4 makes contact with the lower end of the ring-shaped wall portion 3d of the upper half 3. Since the legs 4a through 4d of the contact pressing member 4 are respectively guided by the cutouts in the ring-shaped wall 3c, the contact pressing member 4 can always be maintained at the central position (neutral position) in the home position of the key 2. In this home position of the key 2, the gap s described above is formed between the bottom surface 2g of the key 2 and the top surface of the dome-shaped portion 3b.

According to this sixth embodiment, it is possible to obtain substantially the same effects as in the case of the fifth embodiment described above.

In the described embodiments, the stem portion 2e of the key 2 is secured on the contact pressing member 4. However, it is of course possible to provide the stem portion on the contact pressing member 4 and secure this stem on the key 2.

In addition, although the dome-shaped portion 3b has a continuous surface in the described embodiments, it is possible to provide openings in the dome-shaped portion 3b as long as the required rigidity and strength can be obtained. Similarly, it is also possible to provide openings in the spherical surface portion 4e if the required rigidity and strength can be obtained.

Moreover, although 4 electrical contacts are provided in the described embodiments, the number of electrical contacts and the corresponding bulges of the resilient member is of course not limited to 4.

In the embodiments described above, the physical fulcrum of the key which tilts is not located on the wiring board (or substrate). For this reason, it is possible to prevent an undesired external force from being applied on the wiring board even if the external force is applied on the key. By preventing the undesirable external force from reaching the wiring board, it is possible to prevent damage to the wiring and contacts provided on the wiring board. In other words, in the described embodiments, the key is not tilted about a physical point, but is tilted while being guided by at least a dome-shaped or curved surface of the casing.

In addition, it is of course possible to combine the structures of the various embodiments described above.

Further, the present invention is not limited to these embodiments, but various variations and modifications may be made without departing from the scope of the present invention, as defined by the claims.

## Claims

1. A control key device, comprising :
a casing (3) having a top surface and hole (3a);
a substrate (6) provided within the casing (3) and having a plurality of electrical contacts, (6a-6d);
a resilient member (5) provided on the substrate (6) and having a plurality of bulges (5a-5d), each of the bulges having an electrically conductive portion and being positioned so as to be superimposed on, but closely spaced from the electrical contacts (6a-6d) by a first gap (g) such that the electrically conductive portions are moved into engagement with the corresponding electrical contacts (6a-6d) to achieve electrical contact when the bulges are resiliently deformed.
a contact pressing member (4) provided on the resilient member (5) and having a plurality of legs (4a-4d) at positions corresponding to the bulges (5a-5d); and
a key (2) secured on the contact pressing member (4) via the hole (3a) in the casing (3) so as to be manually movable between a home position and a tilted position;
the contact pressing member (4) being approximately level and the legs (4a-4d) resting on corresponding bulges (5a-5d) when the key (2) is in the home position, one of the legs (4a-4d) resiliently deforming a corresponding one of the bulges (5a-5d) when the key (2) is in a tilted position to achieve electrical contact between the electrically conductive portion of the bulge and a corresponding one of the electrical contacts (6a-6d), the key (2) having a sliding surface (2g) which allows sliding contact with the casing (3) when the key is moved into a tilted position and being automatically returned to the home position by a resilient restoration force exerted by the resilient member (5);
the device being characterized in that :
the casing (3) is provided at an arbitary part thereof with a generally dome-shaped portion (3b), the hole (3a) being provided at a central part of the dome-shaped portion (3b), such that, when the key is in the home position, a second gap (s) is provided between the key (2) and the dome-shaped portion (3b).

2. A control key device according to claim 1, further characterized in that the bulges (5a-5d) have a resilient force enough to maintain the key (2) at a level position when the key (2) is in the home position.

3. A control key device according to claim 1 or 2, further characterized in that a gap (s) between the key (2) and the dome-shaped portion (3b) is smaller than a gap (g) between each of the electrically conductible portions on the bulges (5a-5d) and the corresponding electrical contacts (6a-6d), the gaps existing when the key (2) is in the home position, and a downward movement of the key (2) is limited by the dome-shaped portion (3b) so that corresponding pairs of the electrically conductive portions which are located at positions symmetrical with respect to the dome-shaped portion (3b) do not turn ON simultaneously both of two symmetrically positioned switches.

4. A control key device according to any one of claims 1 to 3, further characterized in that the dome-shaped portion (3b) has a convex surface facing the key (2), the key (2) has a concave surface (2g) corresponding to the convex surface, and the key (2) is supported by the bulges (5a- 5d) so that the concave surface of the key (2) is closely spaced apart from the convex surface of the dome-shaped portion (3b) by the second gap (s) when the key (2) is in the home position.

5. A control key device according to claim 4, further characterized in that it further includes a force conducting member (2e) mechanically fixed to the key (2) via the hole (3a) in the dome-shaped portion (3b) so that a manipulating force applied to the key (2) is conducted to the bulges (5a-5d) and the resilient forces caused by the bulges (5a-5d) are conducted to the key (2) via the force conducting member (2e) and the contact pressing member (4).

6. A control key device according to claim 5, further characterized in that the dome-shaped portion (3b) includes a cave and a concave surface corresponding to the convex surface, and the contact pressing member (4) includes a convex surface member (4e) corresponding to the concave surface of the dome-shaped portion (3b) and is disposed in the cave so that an upward movement of the contact pressing member (4) is limited by causing the convex surface member to detachably contact the concave surface of the dome-shaped portion (3b).

7. A control key device according to claim 5, further characterized in that the dome-shaped portion includes protruding means (3c), protruding toward the substrate (6) and disposed around the through hole (3a) for limiting an upward movement of the contact pressing member (4) by causing a top surface of the contact pressing member (4) to detachably contact the protruding means (3c).

8. A control key device according to any one of claims 1 to 7, further characterized in that each of the bulges (5a-5d) includes a disc shaped portion (5a1-5d1) and a movable electrical contact (5a3-5d3) element is formed on the lower surface of the disc shaped portion, the bulges resiliently supporting the disc shaped portions.

9. A control key device according to any one of claims 1 to 8, further characterized in that it comprises a holding member (3f) holding the dome-shaped portion (3b) in a spatially fixed position between the substrate (6) and the key (2), the dome-shaped portion (3b) and the holding member (37) being unitarily formed with the casing (3).

10. A control key device according to claim 9, further characterized in that the casing (3) further comprises a cavity (3e) and a side wall defining the cavity, and the holding member (3f) extends from the side wall.

11. A control key device according to any one of claims 1 to 10, further characterized in that it comprises a lower housing member (7) with supporting means (7a) which supports portions of the substrate (6) on which the plurality of electrical contacts (6a-6d) are formed.

12. A control key device according to any one of claims 1 to 11, further characterized in that it includes switch buttons (110) for controlling function modes of a game device.

13. A game apparatus to which a control key device as defined in any of claims 1 to 12 is detachably connected.

14. A control key device comprising :
a substrate (6) with a plurality of electrical contacts (6a-6d) disposed symmetrically thereon;
a casing (3) having a central convex portion (3b) which is disposed over a surface portion of the substrate (6) surrounded by the plurality of electrical contacts (6a-6d), the convex portion (3b) being secured to the casing (3) so as to be spaced apart from the surface portion of the substrate;
a resilient member (5) provided on the substrate (6) and having a plurality of bulges (5a-5d), each of the bulges having an electrically conductive portion and being positioned so as to be superimposed thereon, but closely spaced from the electrical contacts (6a-6d) such that the electrically conductive portions are moved into engagement with the corresponding electrical contacts (6a-6d) to achieve electrical contact when the bulges are resiliently deformed;
a key (2) with a contact pressing member (4) movably disposed on the bulges (6a-6d) so that the key (2) is approximately level when the key is in the home position, and so that the contact pressing member (4) moves down to cause one of the bulges (5a-5d) to resiliently deform when the key (2) is tilted by a manupulating force and the key (2) is automatically returned to the home position by a resilient restoration force exerted by the resilient member (5) when the manipulating force is released;
the device being characterized in that :
the key (2) with the contact pressing member (4) is so formed as to be movably supported by a resilient force caused by the bulges (5a-5d) to provide a gap between a sliding surface (2g) of the key (2) and the central convex portion (3b) when the key is in the home position.

## Patentansprüche

1. Funktionstastenvorrichtung, aufweisend:
ein Gehäuse (3) mit einer oberen Fläche und einem Loch (3a),
einem Substrat (6), das in dem Gehäuse (3) vorgesehen ist und mehrere elektrische Kontakte (6a-6d) aufweist,
ein elastisches Element (5), das auf dem Substrat (6) vorgesehen ist und mehrere vorstehende Bereiche (5a-5d) aufweist, wobei jeder vorstehende Bereich einen elektrisch leitfähigen Bereich aufweist und derart angeordnet ist, daß er über den elektrischen Kontakten (6a-6d) liegend, jedoch über einen ersten Spalt (g) nah beabstandet zu diesen angeordnet ist, derart, daß die elektrisch leitfähigen Bereiche mit den entsprechenden elektrischen Kontakten (6a-6d) in Eingriff bewegt werden, so daß ein elektrischer Kontakt erzielt wird, wenn die vorstehenden Bereiche elastisch deformiert werden,
ein Kontaktdruckelement (4), das auf dem elastischen Element (5) vorgesehen ist und mehrere Füße (4a-4d) an Positionen aufweist, die den vorstehenden Bereichen (5a-5d) entsprechen, und
eine Taste (2), die an dem Kontaktdruckelement (4) über das Loch (3a) in dem Gehäuse (3) befestigt ist, so daß sie zwischen einer Ruheposition und einer gekippten Position manuell bewegbar ist,
wobei das Kontaktdruckelement (4) näherungsweise waagerecht liegt und die Füße (4a-4d) auf den entsprechenden vorstehenden Bereichen (5a-5d) aufliegen, wenn die Taste (2) sich in Ruheposition befindet, einer der Füße (4a-4d) einen entsprechenden vorstehenden Bereich (5a-5d) elastisch verformt, wenn die Taste (2) sich in einer gekippten Position befindet, so daß ein elektrischer Kontakt zwischen dem elektrisch leitfähigen Bereich des vorstehenden Bereichs und einem entsprechenden Bereich des elektrischen Kontakts (6a-6d) erhalten wird, wobei die Taste (2) eine Gleitfläche (2g) aufweist, die einen gleitenden Kontakt mit dem Gehäuse (3) erlaubt, wenn die Taste in eine gekippte Position bewegt wird, und automatisch durch eine elastische Rückstellkraft, die durch das elastische Element (5) ausgeübt wird, in die Ruheposition zurückgeführt wird,
wobei die Vorrichtung **dadurch gekennzeichnet** ist, daß
das Gehäuse (3) an einem beliebigen Teil an ihr vorgesehen ist und mit einem im allgemeinen domförmigen Bereich (3b) versehen ist, das Loch (3a) an einem zentralen Teil des domförmigen Bereichs (3b) vorgesehen ist, derart daß ein zweiter Spalt (s) zwischen der Taste (2) und dem domförmigen Bereich (3b) vorgesehen ist, wenn sich die Taste in Ruheposition befindet.

2. Funktionstastenvorrichtung nach Anspruch 1, ferner **dadurch gekennzeichnet,** daß die vorstehenden Bereich (5a-5d) eine elastische Kraft aufweisen, die ausreicht, die Taste (2) in einer waagerechten Position zu halten, wenn sich die Taste (2) in Ruheposition befindet.

3. Funktionstastenvorrichtung nach einem der Ansprüche 1 oder 2, **dadurch gekennzeichnet,** daß
ein Spalt (s) zwischen der Taste (2) und dem domförmigen Bereich (3b) kleiner als ein Spalt (g) zwischen jedem der elektrisch leitfähigen Bereiche auf den vorstehenden Bereichen (5a-5d) und den entsprechenden elektrischen Kontakten (6a-6d) ist, wobei die Spalte auftreten, wenn sich die Taste (2) in Ruheposition befindet, und
eine Bewegung der Taste (2) nach unten durch den domförmigen Bereich (3b) begrenzt wird, so daß ein entsprechendes Paar elektrisch leitfähiger Bereiche, die an Positionen angeordnet sind, die symmetrisch in bezug auf den domförmigen Bereich (3b) angeordnet sind, nicht zwei symmetrisch angeordnete Schalter gleichzeitig AN-schalten.

4. Funktionstastenvorrichtung nach einem der Ansprüche 1-3, ferner **dadurch gekennzeichnet,** daß der domförmige Bereich (3b) eine konvexe Fläche aufweist, die der Taste (2) gegenüberliegt, wobei die Taste (2) eine konkave Oberfläche (2g) aufweist, die der konvexen Fläche entspricht, und die Taste (2) von den vorstehenden Bereichen (5a-5d) gehalten wird, so daß die konkave Fläche der Taste (2) von der konvexen Oberfläche des domförmigen Bereiches (3b) durch den zweiten Spalt (s) nah beabstandet ist, wenn sich die Taste (2) in Ruheposition befindet.

5. Funktionstastenvorrichtung nach Anspruch 4, ferner **dadurch gekennzeichnet**, daß sie ferner ein kraftübertragendes Element (2e) umfaßt, das mechanisch an der Taste (2) über das Loch (3a) in dem domförmigen Bereich (3b) befestigt ist, so daß eine Betätigungskraft, die auf die Taste (2) ausgeübt wird, an die vorstehenden Bereiche (5a-5d) weitergeleitet wird, und die elastischen Kräfte, die durch die vorstehenden Bereiche (5a-5d) ausgeübt werden, über das kraftübertragende Element (2e) und das Kontaktdruckelement (4) an die Taste (2) weitergegeben werden.

6. Funktionstastenvorrichtung nach Anspruch 5, ferner **dadurch gekennzeichnet**, daß der domförmige Bereich (3b) eine ausgehöhlte und eine konkave Fläche umfaßt, die der konvexen Fläche entspricht und das Kontaktdruckelement (4) ein konvexes Flächenelement (4e) umfaßt, das der konkaven Fläche des domförmigen Bereichs (3b) entspricht und in der Aushöhlung angeordnet ist, so daß eine nach oben gerichtete Bewegung des Kontaktdruckelementes (4) dadurch begrenzt ist, daß das konvexe Flächenelement dazu gebracht wird, wieder lösbar mit der konkaven Fläche des domförmigen Bereiches (3b) in Kontakt zu treten.

7. Funktionstastenvorrichtung nach Anspruch 5, ferner **dadurch gekennzeichnet**, daß der domförmige Bereich vorstehende Einrichtungen (3c) umfaßt, die in Richtung des Substrates (6) vorstehen und um das durchgehende Loch (3a) angeordnet sind, um eine nach oben gerichtete Bewegung des Kontaktdruckelementes (4) begrenzen, indem sie bewirken, daß die obere Fläche des Kontaktdruckelementes (4) wieder lösbar mit den vorstehenden Einrichtungen (3c) in Kontakt tritt.

8. Funktionstastenvorrichtung nach einem der vorhergehenden Ansprüche 1 bis 7, ferner **dadurch gekennzeichnet**, daß jeder vorstehende Bereich (5a-5d) einen scheibenförmigen Bereich (5al-5d1) aufweist und ein bewegliches elektrische Kontakt-(5a3-5d3)-Element auf der unteren Fläche des scheibenförmigen Bereichs ausgebildet ist, wobei die vorstehenden Bereiche die scheibenförmigen Bereiche elastisch halten.

9. Funktionstastenvorrichtung nach einem der Ansprüche 1 bis 8, ferner **dadurch gekennzeichnet**, daß sie ein Halteelement (3f) aufweist, das den domförmigen Bereich (3b) in einer räumlich festgelegten Position zwischen dem Substrat (6) und der Taste (2) hält, wobei der domförmige Bereich (3b) und das Halteelement (3f) als Einheit mit dem Gehäuse (3) ausgebildet sind.

10. Funktionstastenvorrichtung nach Anspruch 9, ferner **dadurch gekennzeichnet**, daß das Gehäuse (3) ferner einen Hohlraum (3e) und eine Seitenwand aufweist, die den Hohlraum umgibt, und das Halteelement (3f) sich von der Seitenwand erstreckt.

11. Funktionstastenvorrichtung nach einem der Ansprüche 1 bis 10, ferner **dadurch gekennzeichnet**, daß sie ein unteres Gehäuseteil (7) mit Haltevorrichtungen (7a) aufweist, das Bereiche des Substrates (6), auf denen die Vielzahl der elektrischen Kontakte (6a-6d) ausgebildet sind, hält.

12. Funktionstastenvorrichtung nach einem der Ansprüche 1 bis 11, ferner **dadurch gekennzeichnet**, daß sie Schaltknöpfe (110) zur Steuerung von Funktionsmodi einer Spielvorrichtung umfaßt.

13. Spielvorrichtung, mit der eine Funktionstastenvorrichtung, wie sie in einem der Ansprüche 1 bis 12 definiert ist, lösbar verbunden ist.

14. Funktionstastenvorrichtung, aufweisend
ein Substrat (6) mit einer Vielzahl von elektrischen Kontakten (6a-6d), die symmetrisch auf diesem angeordnet sind,
ein Gehäuse (3) mit einem zentralen konvexen Bereich (3b), der über einem Oberflächenbereich des Substrates (6) angeordnet ist und von der Vielzahl der elektrischen Kontakte (6a-6d) umgeben ist, wobei der konvexe Bereich (3b) an dem Gehäuse (3) befestigt ist, so daß er in einem Abstand zu dem Oberflächenbereich des Substrates steht,
ein elastisches Element (5), das auf dem Substrat (6) vorgesehen ist und eine Vielzahl von vorstehenden Bereiche (5a-5d) aufweist, wobei jeder vorstehende Bereich einen elektrisch leitfähigen Bereich aufweist und so angeordnet ist, daß er über den elektrischen Kontakten (6a-6d), jedoch in kurzem Abstand zu diesen liegt, derart, daß die elektrisch leitfähigen Bereiche in Eingriff mit den entsprechenden elektrischen Kontakten (6a-6d) bewegt werden, um einen elektrischen Kontakt herbeizuführen, wenn die vorstehenden Bereiche elastisch deformiert werden,
eine Taste (2) mit einem Kontaktdruckelement (4), die beweglich auf den vorstehenden Bereichen (6a-6d) angeordnet sind, so daß die Taste (2) näherungsweise waagerecht steht, wenn die Taste sich in Ruheposition befindet, und so daß das Kontaktdruckelement (4) sich nach unten bewegt, um zu bewirken, daß ein vorstehender Bereich (5a-5d) sich elastisch verformt, wenn die Taste (2) durch eine Betätigungskraft gekippt wird, und die Taste (2) automatisch durch eine elastische Rückstellkraft, die durch das elastische Element (5) ausgeübt wird, wenn die Betätigungskraft zurückgenommen wird, in die Ruheposition zurückbewegt wird,
wobei die Vorrichtung **dadurch gekennzeichnet** ist, daß
die Taste (2) mit dem Kontaktdruckelement (4) derart ausgebildet ist, daß sie beweglich durch eine elastische Kraft gehalten wird, die durch die vorstehenden Bereich (5a-5d) ausgeübt wird, um einen Spalt zwischen einer Gleitfläche (2g) der Taste (2) und dem zentralen konvexen Bereich (3b) bereitzustellen, wenn sich die Taste in der Ruheposition befindet.

## Revendications

1. Dispositif de touche de commande, comprenant :
un boîtier (3) ayant une surface supérieure et un trou (3a) ;
un substrat (6) disposé à l'intérieur du boîtier (3) et comportant plusieurs contacts électriques (6a à 6d) ;
un élément élastique (5) disposé sur le substrat (6) et comportant plusieurs renflements (5a à 5d), chacun des renflements ayant une partie conductrice de l'électricité et étant placé de façon à être superposé sur les, mais légèrement espacé des, contacts électriques (6a à 6d) par un premier écartement (g) de façon telle que les parties conductrices de l'électricité soient amenées en contact avec les contacts électriques (6a à 6d) correspondants pour réaliser un contact électrique lorsque les renflements sont déformés de manière élastique ;
un élément (4) de pression de contact disposé sur l'élément élastique (5) et comportant plusieurs bras (4a à 4d) à des positions correspondant aux renflements (5a à 5d) ; et
une touche (2) fixée sur l'élément (4) de pression de contact à travers le trou (3a) du boîtier (3) de façon à être mobile manuellement entre une position de repos et une position inclinée ;
l'élément (4) de pression de contact étant à peu près de niveau et les bras (4a à 4d) reposant sur les renflements (5a à 5d) correspondants lorsque la touche (2) est en position de repos, l'un des bras (4a à 4d) déformant élastiquement l'un des renflements (5a à 5d) lorsque la touche (2) est en position inclinée pour réaliser un contact électrique entre la partie conductrice de l'électricité du renflement et l'un correspondant des contacts électriques (6a à 6d), la touche (2) comportant une surface (2g) de glissement qui permet le contact glissant avec le boîtier (3) lorsque l'on amène la touche en position inclinée et étant ramenée automatiquement en position de repos par une force de rappel élastique exercée par l'élément élastique (5) ;
le dispositif étant caractérisé en ce que :
le boîtier (3) est pourvu au droit d'une certaine partie de celui-ci, d'une partie (3b) globalement en forme de dôme, le trou (3a) étant disposé au droit d'une partie centrale de la partie (3b) en forme de dôme, de façon telle que, lorsque la touche est en position de repos, un second écartement (s) est ménagé entre la touche (2) et la partie (3b) en forme de dôme.

2. Dispositif de touche de commande selon la revendication 1, caractérisé en outre en ce que les renflements (5a à 5d) ont une force élastique suffisante pour maintenir la touche (2) en position de niveau lorsque la touche (2) est en position de repos.

3. Dispositif de touche de commande selon la revendication 1 ou 2, caractérisé en outre en ce que l'écartement (s) entre la touche (2) et la partie (3b) en forme de dôme est plus petit que l'écartement (g) entre chacune des parties conductrices de l'électricité des renflements (5a à 5d) et le contact électrique (6a à 6d) correspondant, les écartements existant lorsque la touche (2) est en position de repos ; et
en ce qu'un déplacement vers le bas de la touche (2) est limité par la partie (3b) en forme de dôme de façon que des paires correspondantes de parties conductrices de l'électricité, qui sont situées à des positions symétriques par rapport à la partie (3b) en forme de dôme ne ferment pas simultanément deux interrupteurs positionnés symétriquement.

4. Dispositif de touche de commande selon l'une quelconque des revendications 1 à 3, caractérisé en outre en ce que la partie (3b) en forme de dôme a une surface convexe faisant face à la touche (2), en ce que la touche (2) a une surface concave (2g) correspondant à la surface convexe, et en ce que la touche (2) est supportée par les renflements (5a à 5d) de façon que la surface concave de la touche (2) soit légèrement espacée, par le second écartement (s), de la surface convexe de la partie (3b) en forme de dôme, lorsque la touche (2) est en position de repos.

5. Dispositif de touche de commande selon la revendication 4, caractérisé en outre en ce qu'il comprend de plus un élément (2e) de transmission de force fixé mécaniquement à la touche (2) à travers le trou (3a) de la partie (3b) en forme de dôme, de façon qu'une force de manipulation appliquée à la touche (2) soit transmise aux renflements (5a à 5d) et que les forces élastiques provoquées par les renflements (5a à 5d) soient transmises à la touche (2) par l'intermédiaire de l'élément (2e) de transmission de force et de l'élément (4) de pression de contact.

6. Dispositif de touche de commande selon la revendication 5, caractérisé en outre en ce que la partie (3b) en forme de dôme comprend une cavité et une surface concave correspondant à la surface convexe, et en ce que l'élément (4) de pression de contact comprend un élément de surface convexe (4e) correspondant à la surface concave de la partie (3b) en forme de dôme et est disposé dans la cavité de façon qu'un déplacement vers le haut de l'élément (4) de pression de contact soit limité, en faisant que l'élément de surface convexe contacte, de façon à pouvoir s'en détacher, la surface concave de la partie (3b) en forme de dôme.

7. Dispositif de touche de commande selon la revendication 5, caractérisé en outre en ce que la partie en forme de dôme comprend un moyen (3c) formant saillie, en saillie en direction du substrat (6) et disposé autour du trou traversant (3a) pour limiter le déplacement vers le haut de l'élément (4) de pression de contact, en faisant qu'une surface supérieure de l'élément (4) de pression de contact contacte, de façon à pouvoir s'en détacher, le moyen (3c) formant saillie.

8. Dispositif de touche de commande selon l'une quelconque des revendications 1 à 7, caractérisé en outre en ce que chacun des renflements (5a à 5d) comprend une partie (5a1 à 5d1) en forme de disque et en ce qu'un élément (5a3 à 5d3) formant contact électrique mobile est formé sur la surface inférieure de la partie en forme de disque, les renflements supportant élastiquement les parties en forme de disque.

9. Dispositif de touche de commande selon l'une quelconque des revendications 1 à 8, caractérisé en outre en ce qu'il comprend un élément (3f) de maintien maintenant la partie (3b) en forme de disque dans une position spatialement fixe entre le substrat (6) et la touche (2), la partie (3b) en forme de dôme et l'élément (3f) de maintien étant formés d'un seul bloc avec le boîtier (3).

10. Dispositif de touche de commande selon la revendication 9, caractérisé en outre en ce que le boîtier (3) comprend de plus une cavité (3e) et une paroi latérale définissant la cavité, et en ce que l'élément (3f) de maintien s'étend depuis la paroi latérale.

11. Dispositif de touche de commande selon l'une quelconque des revendications 1 à 10, caractérisé en outre en ce qu'il comprend un élément inférieur (7) de boîtier, avec un moyen (7a) formant support qui supporte des parties du substrat (6) sur lesquelles les contacts électriques (6a à 6d) sont formés.

12. Dispositif de touche de commande selon l'une quelconque des revendications 1 à 11, caractérisé en outre en ce qu'il comprend des boutons d'interrupteur (110) pour commander des modes de fonction d'un dispositif de jeu.

13. Appareil de jeux auquel est connecté, de façon amovible, un dispositif de touche de commande tel que défini dans l'une quelconque des revendications 1 à 12.

14. Dispositif de touche de contact, comprenant :
un substrat (6) avec plusieurs contacts électriques (6a à 6d) disposés symétriquement sur lui ;
un boîtier (3) comprenant une partie centrale convexe (3b) qui est disposée sur une partie de surface du substrat (6) entourée par les contacts électriques (6a à 6d), la partie convexe (3b) étant fixée au boîtier (3) de façon à être écartée de la partie surface du substrat ;
un élément élastique (5) disposé sur le substrat (6) et comportant plusieurs renflements (5a à 5d), chacun des renflements ayant une partie conductrice de l'électricité et étant placé de façon à être superposé sur les, mais légèrement espacé des, contacts électriques (6a à 6d), de façon telle que les parties conductrices de l'électricité soient amenées en contact avec les contacts électriques (6a à 6d) correspondants pour réaliser un contact électrique lorsque les renflements sont déformés de manière élastique ;
une touche (2) avec un élément (4) de pression de contact disposée de façon mobile sur les renflements (5a à 5d) de façon que la touche (2) soit à peu près de niveau lorsque la touche est en position de repos, et de façon que l'élément (4) de pression de contact se déplace vers le bas pour faire que l'un des renflements (5a à 5d) se déforme de manière élastique lorsque la touche (2) est inclinée par une force de manipulation, et que la touche (2) revienne automatiquement à la position de repos par une force de rappel élastique exercée par l'élément élastique (5) lorsque l'on supprime la force de manipulation ;
le dispositif étant caractérisé en ce que :
la touche (2) avec l'élément (4) de pression de contact est formée de façon à être supportée de façon mobile par une force élastique provoquée par les renflements (5a à 5d) pour créer, lorsque la touche est en position de repos, un écartement entre une surface (2g) de glissement de la touche (2) et la partie convexe centrale (3b).
